# EUROPEAN PATENT APPLICATION

(11) **EP 3 715 140 A1**
(43) Date of publication of application: **30.09.2020**
(21) Application number: 19166166.9
(22) Date of filing: 29.03.2019
(51) Int. Cl.: B41M 7/00, B41M 1/06, C09D 11/037, C09D 11/101, B41C 1/10

(54) **A METHOD OF PRINTING**

(71) Applicant: AGFA NV, 2640 Mortsel (BE)
(72) Inventor: VERBRUGGHE, Sam, 2640 Mortsel (BE); DEFOSSEZ, Yves, 2640 Mortsel (BE); ORDONEZ, Isabelle, 2640 Mortsel (BE); HILLEWAERE, Xander, 2640 Mortsel (BE)
(74) Representative: Vanderstede, Els

(57) **Abstract**

A method of printing is disclosed comprising the steps of supplying an offset LED UV ink comprising a filler having a Mohs hardness value below 2.5, and fountain to an image-wise exposed lithographic printing plate including hydrophobic thermoplastic polymer particles; transferring the ink to a substrate and subjecting the obtained printed substrate to UV LED radiation.

## Description

### Technical Field

The invention relates to a method of printing.

### Background Art

Lithographic printing typically involves the use of a so-called printing master such as a printing plate which is mounted on a cylinder of a rotary printing press. The master carries a lithographic image on its surface and a print is obtained by applying ink to said image and then transferring the ink from the master onto a receiver material, which is typically paper. In conventional lithographic printing, ink as well as an aqueous fountain solution (also called dampening liquid) are supplied to the lithographic image which consists of oleophilic (or hydrophobic, i.e. ink-accepting, water-repelling) areas as well as hydrophilic (or oleophobic, i.e. water-accepting, ink-repelling) areas. In so-called driographic printing, the lithographic image consists of ink-accepting and ink-abhesive (ink-repelling) areas and during driographic printing, only ink is supplied to the master.

Lithographic printing masters are generally obtained by the image-wise exposure and processing of a radiation sensitive layer on a lithographic support. Imaging and processing renders the so-called lithographic printing plate precursor into a printing plate or master. Image-wise exposure of the radiation sensitive coating to heat or light, typically by means of a digitally modulated exposure device such as a laser, triggers a (physico-)chemical process, such as ablation, polymerization, insolubilization by crosslinking of a polymer or by particle coagulation of a thermoplastic polymer latex, solubilization by the destruction of intermolecular interactions or by increasing the penetrability of a development barrier layer.

Although some plate precursors are capable of producing a lithographic image immediately after exposure, the most popular lithographic plate precursors require wet processing since the exposure produces a difference in solubility or difference in rate of dissolution in a developer between the exposed and the non-exposed areas of the coating. In positive working lithographic plate precursors, the exposed areas of the coating dissolve in the developer while the non-exposed areas remain resistant to the developer. In negative working lithographic plate precursors, the non-exposed areas of the coating dissolve in the developer while the exposed areas remain resistant to the developer. Most lithographic plate precursors contain a hydrophobic coating on a hydrophilic support, so that the areas which remain resistant to the developer define the ink-accepting, hence printing areas of the plate while the hydrophilic support is revealed by the dissolution of the coating in the developer at the non-printing areas.

The most popular thermal plates form an image by a heat-induced solubility difference in an alkaline developer between exposed and non-exposed areas of the coating. The coating typically comprises an oleophilic binder, e.g. a phenolic resin, of which the rate of dissolution in the developer is either reduced (negative working) or increased (positive working), by the image-wise exposure. During processing, the solubility differential leads to the removal of the non-image (non-printing) areas of the coating, thereby revealing the hydrophilic support, while the image (printing) areas of the coating remain on the support. Typical examples of such plates are described in e.g. EP 625 728, EP 823 327, EP 825 927, EP 864 420, EP 894 622 and EP 901 902. Negative working embodiments of such thermal materials often require a pre-heat step between exposure and development as described in e.g. EP 625 728.

Negative working plate precursors which do not require a pre-heat step may contain an image-recording layer that works by heat-induced particle coalescence of thermoplastic polymer particles, as described in e.g. EP-A's 770 494, 770 495, 770 496 and 770 497. These patents disclose a method for making a lithographic printing plate comprising the steps of (1) image-wise exposing a plate precursor having a heat-sensitive image-recording layer to infrared radiation, wherein said image-recording layer comprises hydrophobic thermoplastic polymer particles, sometimes also referred to as latex particles, which are dispersed in a hydrophilic binder, and (2) developing the image-wise exposed element by applying water or by mounting the plate precursor on the plate cylinder of a press and then supplying fountain and/or ink. During the development step, the unexposed areas of the image-recording layer are removed from the support, whereas the latex particles in the exposed areas have coalesced to form a hydrophobic phase which is not removed in the development step. In EP-A 1 342 568 a similar plate precursor is developed with a gum solution and in EP-A's 1 614 538, 1 614 539 and 1 614 540 development is achieved by means of an alkaline solution. It is known in the art that lithographic plates, obtained after exposure, development and optional gumming, can be heat-treated in a so-called post-baking step in order to increase the presslife of the plate on the press. A typical post-baking is carried out by heating the plate in an oven at a high temperature, e.g. of about 250 °C. EP-A 1 506 854 describes a method for post-baking various plates, including plates that work by heat-induced latex coalescence, in a short time of 1 minute or less by means of an infrared radiation source. As a result, the robustness on the press of the plates - i.e. the presslife - is improved.

The classical workflow of plates based on latex coalescence involves first an exposure step of the printing plate precursor in an infrared platesetter, an alkaline developing step, and a rinse and gum step. Over the past years, there is a clear evolution in the direction of a simplified workflow where the developing, rinse and/or gumming steps are carried out in one single step or where processing is carried out with a neutral gum and then gummed in a second step. Alternatively, on-press processing wherein the plate precursor is mounted on the press and the coating layer is developed by interaction with the fountain and ink that are supplied to the plate during the press run, has become very popular. During the first runs of the press, the non-image areas are removed from the support and thereby define the non-printing areas of the plate.

A problem associated with plate precursors that work according to the mechanism of heat-induced latex coalescence, especially when development is carried out on-press by applying ink and/or fountain, is that it is difficult to obtain both a high sensitivity and a high presslife. The energy density required to obtain a sufficient degree of latex coalescence and of adherence of the exposed areas to the support is often higher than 250 mJ/cm². As a result, in platesetters or printing presses equipped with low power exposure devices, such as semiconductor infrared laser diodes, long exposure times are needed. This results in a low throughput, i.e. number of precursors that can be exposed in a given time interval. In addition, in the graphic arts industry, there is an evolution towards the use of LED UV inks which allow more flexiblility in managing the printjob and faster printing due to faster drying of the prints, and a low energy consumption during curing. However, UV LED inks often result in harsh printing conditions, especially on sheet fed presses, whereby the presslife of the printing plates is reduced.

### Summary of invention

It is an object of the present invention to provide a method for printing with a printing plate based on latex coalescence which is characterized by an excellent presslife. The printing plate based on latex coalescence includes a coating including thermoplastic hydrophobic polymer particles.

This object is achieved by the method as defined in independent claim 1 and preferred embodiments in the dependent claims. The method has the specific feature that the printing process includes a printing plate based on latex coalescence and a LED UV curable ink comprising a filler having a hardness on the Mohs scale below 2.5.

It was surprisingly found that the presslife of a printing plate based on latex coalescence is significantly improved when the ink including a filler with a Mohs value below 2.5 is used during printing compared to printing with inks of the prior art.

Other features, elements, steps, characteristics and advantages of the present invention will become more apparent from the following detailed description of preferred embodiments of the present invention. Specific embodiments of the invention are also defined in the dependent claims.

### Description of embodiments

### Ink composition

The ink used in the current invention is an offset LED UV ink and comprises a filler having a hardness on the Mohs scale below 2.5. More preferably, the filler has a hardness on the Mohs scale below 2.0, most preferably a hardness on the Mohs scale equal to or below 1.5. The Mohs scale of mineral hardness is a well-known qualitative ordinal scale characterizing scratch resistance of various minerals through the ability of harder material to scratch softer material.

Suitable examples of such fillers having a hardness on the Mohs scale below 2.5 include inorganic materials such as aluminum silicate hydrate (e.g. pyrophyllite, dickite), calcium hydrate sulfate (e.g. gipsum), magnesium silicate hydroxide (e.g. talc), steatite (soapstone), bentonite and specific types of montmorillonite. The filler is preferably aluminum silicate hydrate (e.g. pyrophyllite, dickite), magnesium silicate hydroxide (e.g. talc) or bentonite. Most preferably the filler is magnesium silicate hydroxide (e.g. talc). The filler most preferably has a Mohs hardness of 1.

The filler in the ink used in the present invention preferable contains less than 200.000 particles/g ink having a mean particle size above 15 micron. More preferably, the ink contains less than 100.000 particles/g ink having a mean particle size above 20 micron. The particle size is defined herein as the particle diameter, measured by an Accusizer CW788 commercially available from Particle Sizing Systems. This technique determines the oversized particle concentrations using a sensor, counter and fluidics configuration. This results in a quantitative analyses of number of particles in a defined size range. The particle diameter may refer to the largest dimension of the particle(s).

The lithographic ink used in the present invention preferably includes a radical polymerisable compound. The radical polymerisable compound preferably includes an ethylenically unsaturated compound and may be a monomer, an oligomer and/or a polymer. The radical polymerisable compounds listed below preferably have a high reactivity, low viscosity, and excellent adhesion to a recording medium. They may be used singly and/or a combination of two or more at any ratio.

Examples of such radical polymerisable compounds include unsaturated carboxylic acids such as acrylic acid, methacrylic acid, itaconic acid, crotonic acid, isocrotonic acid, maleic acid and/or salts thereof, Specific examples thereof include acrylic acid derivatives such as methyl acrylate, ethyl acrylate, n-butyl acrylate, 2-ethylhexyl acrylate, 2-hydroxyethyl acrylate, butoxyethyl acrylate, carbitol acrylate, cyclohexyl acrylate, tetrahydrofurfuryl acrylate, benzyl acrylate, 2-ethylhexyldiglycol acrylate, 2-hydroxy-3-phenoxypropyl acrylate, 2-hydroxybutyl acrylate, hydroxypivalic acid neopentyl glycol diacrylate, 2-acryloyloxyelhylphthalie acid, methoxy polyethylene glycol acrylate, tetramethylolmethane triacrylate, 2-acryloyloxyethyl-2-hydroxyethylphthalic acid, dimethyloltricyclodecane diacrylate, ethoxylated phenyl acrylate, 2-acryloyloxyethylsuccinic acid, nonyl phenol ethylene oxide (EO) adduct acrylate, modified glycerin triacrylate, bisphenol A diglycidyl ether acrylic acid adduct, modified bisphenol A diacrylate, phenoxypolyethylene glycol acrylate, 2-acryloyloxyethylhexahydrophthalic acid, bisphenol A propylene oxide (PO) adduct diacrylate, bisphenol A EO adduct diacrylate, dipentaerythritol hexaacrylate, pentaerythritol triacrylate tolylenediisocyanate urethane prepolymer, lactone-modified flexible acrylate, butoxyethyl acrylate, propylene glycol diglycidyl ether acrylic acid adduct, pentaerythritol triacrylate hexamethylenediisocyanate urethane prepolymer, 2-hydroxyethyl acrylate, methoxydipropylene glycol acrylate, ditrimethylolpropane tetraacrylate, pentaerythritol triacrylate hexamethylenediisocyanate urethane prepolymer, stearyl acrylate, isoamyl acrylate, isomyristyl acrylate, isostearyl acrylate, lactone-modified acrylate, and the like, and corresponding methacrylate compounds in which acryloxy groups of these acrylate compounds are modified into methacryloxy groups; bis(4-cryloxypolyethoxyphenyl) propane, neopentylglycol diacrylate, 1 ,6-hexane-diol diacrylate, ethylene glycol diacrylate, diethylene glycol diacrylate, triethylene glycol diacrylate, tetraethylene glycol diacrylate, polyethylene glycol diacrylate, polypropylene glycol diacrylate, pentaerythritol triacrylate, pentaerythritol tetraacrylate, dipentaerythritol tetraacrylate, trimethylolpropane triacrylate, tetramethylolmethane tetraacrylate, oligoester acrylate, N-methylolaerylamide, diacetoneacrylamide, epoxyacrylate, and the like, methacrylic derivatives such as methyl methacrylate, n-butyl methacrylate, 2-ethylhexyl methacrylate, lauryl methacrylate, allyl methacrylate, glycidyl methacrylate, benzyl methacrylate, dimethylaminomethyl methacrylate, 1 ,6-hexanediol dimethacrylate, ethylene glycol dimethacrylate, triethylene glycol dimethacrylate, polyethylene glycol dimethacrylate, polypropylene glycol dimethacrylate, trimethylolethane trimethacrylate, trimethylolpropane trimethacrylate, N-vinyl compounds such as N-vinylpyrrolidoixe, N-vinylcaprolactam, allyl compound derivatives such as allyl glycidyl ether, diallyl phthalate, triallyl trimellitate.

Moreover, as the radical polymerisable compound, anhydrides, acrylonitriles, styrenes, unsaturated polyesters, unsaturated polyethers, unsaturated polyamides, (meth)acrylic acid esters such as (meth)acrylic-based monomers, epoxy-based monomers, and unsaturated urethanes and vinyl ethers may also be used. Examples of suitable vinyl ethers include di- or tri-vinyl ether compounds such as ethylene glycol divinyl ether, diethylene glycol divinyl ether, triethylene glycol divinyl ether, propylene glycol divinyl ether, dipropylene glycol divinyl ether, butanediol divinyl ether, hexanediol divinyl ether, cyclohexanedimethanol divinyl ether, trimethylolpropane trivinyl ether; monovinyl ethers such as ethyl vinyl ether, n-butyl vinyl ether, isobutyl vinyl ether, octadecyl vinyl other, cyclohexyl vinyl ether, hydroxybutyl vinyl ether, 2-ethylhexyl vinyl ether, cyclohexanedimethanol monovinyl ether, n-propyl vinyl ether, isopropyl vinyl ether, isopropenyl vinyl ether, dodecyl vinyl ether, diethylene glycol monovinyl ether, octadecyl vinyl ether, ethylene glycol monovinyl ether, triethylene glycol monovinyl ether, hydroxyethyl monovinyl ether, hydroxynonyl monovinyl ether, and /or combinations thereof.

The lithographic ink may further contain inert, non-curable resins having no curable groups, such as for example polyacrylates, polyesters, polyurethanes, polyamides, ketone resins, aldehyde resins, alkyd resins, phenol-formaldehyde resins, rosin resins, hydrocarbon resins, alkyd resins or mixtures of the aforementioned.

The lithographic ink used in the present invention preferably contains a free radical photoinitiator. Two types of free radical photoinitiators can be distinguished and used in the LED UV ink. A Norrish Type I initiator is an initiator which cleaves after excitation, yielding the initiating radical immediately. A Norrish type II-initiator is a photoinitiator which is activated by actinic radiation and forms free radicals by hydrogen abstraction from a second compound that becomes the actual initiating free radical. This second compound is called a polymerization synergist or co-initiator. Both type I and type II photoinitiators can be used in the present invention, alone or in combination. Suitable examples include benzophenones, benzilketals, dialkoxy acetophenones, α-hydroxyketones such as hydroxyalkyl acetophenones, aminoalkylphenones, acyl phosphine oxides and thioxanthones, for example benzophenone, methyl benzophenone, 4-phenylbenzophenone, 4,4'-bis(dimethylamino)-benzophenone, 4,4'-bis(diethylamino)-benzophenone, 2,2-dimethoxy-2-phenylacetophenone, dimethoxy acetophenone, diethoxy acetophenone, 2-hydroxy-2-methyl-I-phenylpropan-1-one, 2-benzyl-2-dimethylamino-1-(4-morpholinophenyl)-butan-1-one, 2-methyl-I-[4(methoxythio)-phenyl]-2-morpholinopropan2-one, phosphine oxides such as diphenyl acylphenyl phosphine oxide, diphenyl(2, 4, 6-trlmethylbenzoyl)phosphine oxide or 2,4,6-trimethylbenzoylethoxyphenyl phosphine oxide, thioxanthones such as 2-isopropylthioxantone, 4-isopropylthioxanthone, 2,4-dimethylthioxanthone, and/or mixtures thereof. These photoinitiators may be used alone or in combination of one, two or more. Preferred is for example including acyl phosphine oxides and α-hydroxyketones. More preferably, the ink includes at least one acyl phosphine oxide.

In order to increase the photosensitivity further, the ink composition preferably includes a co-initiator. Suitable examples of co-initiators can be categorized in three groups:(1) tertiary aliphatic amines such as methyldiethanolamine, dimethylethanolamine, triethanolamine, triethylamine and N-methylmorpholine; (2) aromatic amines such as amylparadimethylaminobenzoate, 2-n-butoxyethyl-4-(dimethylamino) benzoate, 2-(dimethylamino)ethylbenzoate, ethyl-4-(dimethylamino)benzoate, and 2-ethylhexyl-4-(dimethylamino)benzoate; and(3) (meth)acryiated amines such as dialkylamino alkyl(meth)acrylates (e.g., diethylaminoethylacrylate) or N-morpholinoalkyl-(meth)acrylates (e.g., N-morpholinoethyl-acrylate).

Further suitable photo-initiators are disclosed in CRIVELLO, J.V., et al. VOLUME III: Photoinitiators for Free Radical Cationic . 2nd edition. Edited by BRADLEY, G.. London,UK: John Wiley and Sons Ltd, 1998. p.287-294.

The LED UV ink may contain a polymerization inhibitor. Suitable polymerization inhibitors include phenol type antioxidants, hindered amine light stabilizers, phosphor type antioxidants, hydroquinone monomethyl ether commonly used in (meth)acrylate monomers, and hydroquinone, t-butylcatechol, pyrogallol may also be used.

Suitable commercial inhibitors are, for example, Sumilizer™ GA-80, Sumilizer™ GM and Sumilizer™ GS produced by Sumitomo Chemical Co. Ltd.; Genorad™ 16, Genorad™ 18 and Genorad™ 20 from Rahn AG; Irgastab™ UV10 and Irgastab™ UV22, Tinuvin™ 460 and CGS20 from Ciba Specialty Chemicals; Floorstab™ UV range (UV-1, UV-2, UV-5 and UV-8) from Kromachem Ltd, Additol™ S range (S100, S110, S120 and S130) from Cytec Surface Specialties.

Since excessive addition of these polymerization inhibitors will lower the ink sensitivity to curing, it is preferred that the amount capable of preventing polymerization is determined prior to blending. The amount of a polymerization inhibitor is preferably lower than 2 wt% of the total LED UV ink.

The inks used in the present invention preferably contain one or more colorants in the form of a dye or pigment dispersed therein. By adding a colorant to the ink, an ink for color printing such as a yellow, magenta, cyan or black ink is obtained.

Colorants suitable for use in the inks of the present invention include conventional dyes and organic or inorganic pigments. Dyes include but are not limited to azo dyes, anthraquinone dyes, xanthene dyes, azine dyes, and combinations thereof. Representative pigments may, for example, be selected from the group of Pigment Yellow I, Pigment Yellow 3, Pigment Yellow 12, Pigment Yellow 13, Pigment Yellow 14, Pigment Yellow 17, Pigment Yellow 63, Pigment Yellow 65, Pigment Yellow 73, Pigment Yellow 74, Pigment Yellow 75, Pigment Yellow 83, Pigment Yellow 97, Pigment Yellow 98, Pigment Yellow 106, Pigment Yellow 111, Pigment Yellow 114, Pigment Yellow 121, Pigment Yellow 126, Pigment Yellow 127, Pigment Yellow 136, Pigment Yellow 138, Pigment Yellow 139, Pigment Yellow 174, Pigment Yellow 176, Pigment Yellow 188, Pigment Yellow 194, Pigment Orange 5, Pigment Orange 13, Pigment Orange 16, Pigment Orange 34, Pigment Orange 36, Pigment Orange 61, Pigment Orange 62, Pigment Orange 64, Pigment Red 2, Pigment Red 9, Pigment Red 14, Pigment Red 17, Pigment Red 22, Pigment Red 23, Pigment Red 37, Pigment Red 38, Pigment Red 41, Pigment Red 42, Pigment Red 48: 2, Pigment Red 53: 1, Pigment Red 57: I, Pigment Red 81: I, Pigment Red 112, Pigment Red 122, Pigment Red 170, Pigment Red 184, Pigment Red 210, Pigment Red 238, Pigment Red 266, Pigment Blue 15, Pigment Blue 15: I, Pigment Blue 15: 2, Pigment Blue 15: 3, Pigment Blue 15: 4, Pigment Blue 61, Pigment Green 7, Pigment Green 36, Pigment Violet I, Pigment Violet 19, Pigment Violet 23, Pigment White 6, Pigment White 7, iron oxide, chromium oxide, ferric ammonium ferrocyanide, ferric oxide black, and Pigment Black 7.

Suitable further additives may be included in the ink for optimizing ink performance for particular applications, including the modification of flow, surface tension, rheology, gloss, plasticity, pH, wetting and abrasion resistance of the dried and cured printed ink. Examples of such additives typically include surfactants, waxes, shelf-life stabilizers, oils, solvents, deaerators, emulsifying agents, wetting agents, slip agents, flow agents, leveling agents and/or combinations thereof. In order to improve the adhesion of the ink to a substrate, especially a substrate with a smooth surface where the penetration of the ink into the substrate - the so-called anchoring effect - is minimal, adhesion promotors are preferably used.

Suitable resins present in the ink may include hydrocarbon resins, hybrid resins (hydrocarbon/rosin blend), aldehyde resins, maleic modified rosin ester, alkyds, phenolic modified rosin ester, and other well-known resins suitable for conventional lithography.

Suitable oils and solvents include for example mono-, di-, or tri-glycerides liquid at 25 °C, heavy oils, hydrocarbon distillates, and mineral oils.

Suitable waxes suitably used for the inks include for example amide wax, erucamide wax, polypropylene wax, paraffin wax, polyethylene wax, polytetrafluoroethylene, carnauba wax, and/or combinations thereof.

Suitable surfactants, include a fluorocarbon group or polysiloxanes. A surfactant including a fluorocarbon group is for example a surfactant which comprises a polyether block including a pendant fluoroalkyl group and a urethane linking group. The fluoroalkyl group may be straight or branched and includes a -(CF₂)- and/or a -(CHF)- unit. The number of such units may be 1, i.e. -(CF₃), -(CHF₂) or -(CH₂F); or more than 1, preferably less than 20; more preferably less than 15 and most preferably between 2 and 10. A polysiloxane compound preferably contains more than one siloxane group -Si(R*,R**)-O-, wherein R* and R** are optionally substituted alkyl or aryl groups. Examples thereof include phenylalkylsiloxanes and dialkylsiloxanes.

### Lithographic printing plate precursor

The lithographic printing plate precursor used in the present invention comprises a heat and/or light sensitive coating and is negative-working, i.e. after exposure and development the unexposed areas of the coating are removed from the support and define hydrophilic (non-printing) areas, whereas the exposed coating is not removed from the support and defines oleophilic (printing) areas.

### Thermoplastic hydrophobic particles

The lithographic printing plate precursor comprises a coating including thermoplastic hydrophobic particles. The coating may comprise one or more layer(s). The layer of the coating comprising the thermoplastic polymer particles is referred to herein as the image-recording layer. In a preferred embodiment, the coating consists of the image-recording layer only. The coating may be applied on the support by any coating technique known in the art. After applying the coating, the applied layer(s) are dried as commonly known in the art.

The hydrophobic particles preferably have an average particle diameter of more than 10 nm and less than 40 nm, more preferably of more than 15 nm and less than 38 nm, most preferably of more than 20 and less than 36 nm. The average particle diameter referred to in the current application is defined as the average particle diameter measured by Photon Correlation Spectrometry (∅_{PCS}), also known as Quasi-Elastic or Dynamic Light-Scattering. The measurements were performed according the ISO 13321 procedure (first edition, 1996-07-01) with a Brookhaven BI-90 analyzer, commercially available from Brookhaven Instrument Company, Holtsville, NY, USA. The amount of hydrophobic thermoplastic polymer particles is at least 55 %wt, preferably at least 60 %wt, more preferably at least 65 %wt relative to the weight of all the ingredients in the image-recording layer.

The hydrophobic thermoplastic polymer particles which are present in the coating are preferably selected from polyethylene, poly-(vinyl)chloride, polymethyl(meth)acrylate, polyethyl (meth)acrylate, polyvinylidene chloride, poly(meth)acrylonitrile, polyvinyl-carbazole, polystyrene or copolymers thereof.

According to a preferred embodiment, the thermoplastic polymer particles comprise polystyrene or derivatives thereof, mixtures comprising polystyrene and poly(meth)acrylonitrile or derivatives thereof, or copolymers comprising polystyrene and poly(meth)-acrylonitrile or derivatives thereof. The latter copolymers may comprise at least 50 wt.% of polystyrene, more preferably at least 65 wt.% of polystyrene. In order to obtain sufficient resistivity towards organic chemicals such as hydrocarbons used in e.g. plate cleaners, the thermoplastic polymer particles preferably comprise at least 5 wt.%, more preferably at least 30 wt.%, of nitrogen containing units, such as (meth)acrylonitrile, as described in EP 1 219 416. According to the most preferred embodiment, the thermoplastic polymer particles consist essentially of styrene and acrylonitrile units in a weight ratio between 1:1 and 5:1 (styrene:acrylonitrile), e.g. in a 2:1 ratio.

In a preferred embodiment the hydrophobic thermoplastic particles do not consist of polyester.

The weight average molecular weight of the thermoplastic polymer particles may range from 5,000 to 3,000,000 g/mol, more preferably from 10,000 to 1,000,000. The thermoplastic polymer particles may be partially crosslinked and then they have a molecular weight significantly higher than 3.000.000 g/mol.

Preferred preparation methods of the thermoplastic polymer particles are disclosed in for example EP 1 859 935 in paragraphs [0028] and [0029]. The thermoplastic polymer particles can be prepared by addition polymerization or by condensation polymerization. They are preferably applied onto the lithographic base in the form of a dispersion in an aqueous coating liquid, also referred to as aqueous coating composition. These water based dispersions can be prepared by polymerization in a water-based system e.g. by free-radical emulsion polymerization as described in US 3,476,937 or EP 1 217 010 or by means of dispersing techniques of the water-insoluble polymers into water. Another method suitable for preparing an aqueous dispersion of the thermoplastic polymer particles comprises:
- dissolving the thermoplastic polymer in an organic water immiscible solvent,
- dispersing the thus obtained solution in water or in an aqueous medium and removing the organic solvent by evaporation.

Emulsion polymerization is typically carried out through controlled addition of several components - i.e. vinyl monomers, surfactants (dispersion aids), initiators and optionally other components such as buffers or protective colloids - to a continuous medium, usually water. The result of the emulsion polymerization is a dispersion of discrete polymer particles in water. The surfactants or dispersion aids which are present in the reaction medium have a multiple role in the emulsion polymerization: (i) they reduce the interfacial tension between the monomers and the aqueous phase, (ii) they provide reaction sites through micelle formation in which the polymerization occurs and (iii) they stabilize the growing polymer particles and ultimately the latex emulsion. The surfactants are absorbed at the water/polymer interface and thereby prevent coagulation of the fine polymer particles. Both non-ionic and anionic surfactants are preferably used in emulsion polymerization; anionic surfactants being more preferred as they may result in smaller latex particle sizes. These non-ionic and anionic surfactants can also be used as a mixture of surfactants.

Anionic surfactants are typically absorbed on the latex particle and surround the particle with a charged double layer deriving from their anionic end groups and the positively charged counterions. This double layer on the surface of the polymer particles provides an energy barrier which stabilizes the emulsion by preventing coagulation of the particles. The surfactant is preferably represented by R'-SO4- X+, R"-SO3- X+, R"'-PO4H- X+ , R""-COO-X+ wherein R', R", R'" and R"" independently represent a straight or branched alkyl group having at least 10 carbon atoms, an aryl or heteroaryl group substituted with at least one straight or branched alkyl group having at least 10 carbon atoms or a polyether group which comprises at least one straight or branched alkyl group having at least 10 carbon such as an alkyl substituted polyalkylene-oxide group, and X+ represents a cation such as Na+ or NH4+. The polyalkylene-oxide group may comprise a plurality of alkylene-oxide recurring units of the formula -CnH2n-O- wherein n is preferably an integer in the range 2 to 7. Preferred alkylene-oxide recurring units are typically ethylene oxide, propylene oxide or mixtures thereof. The number of the recurring units range preferably between 2 and 10 units, more preferably between 2 and 5 units, and preferably less than 100, more preferably less than 60. Specific examples of suitable anionic surfactants include sodium lauryl sulphate, sodium lauryl ether sulphate, sodium dodecylbenzene sulphonate, sodium lauryl phosphate and alkyl diphenyl ether sulphonates.

Examples of nonionic surfactants include alkyl alkoxylates, i.e. alkyl ethoxylates, and alkyl polyglycidyl surfactants (APG).

### Infrared absorbing dyes

The coating preferably also contains a compound which absorbs infrared light and converts the absorbed energy into heat. The amount of infrared absorbing agent in the coating is preferably between 0.25 and 25.0%wt, more preferably between 0.5 and 20.0%wt. In a most preferred embodiment, its concentration is at least 6 %wt, more preferred at least 8%wt, relative to the total weight of the ingredients of the image-recording layer. As described in EP 1 859 936, the amount of infrared dye may be adjusted to the particle size of the thermoplastic particles. The infrared absorbing compound can be present in the image-recording layer and/or an optional other layer. Preferred IR absorbing compounds are dyes such as cyanine, merocyanine, indoaniline, oxonol, pyrilium and squarilium dyes or pigments such as carbon black. Examples of suitable IR absorbers are described in e.g. EP 823 327, EP 978 376, EP 1 029 667, EP 1 053 868, EP 1 093 934; WO 97/39894, EP 2 243 628, EP 2 328 753 and WO 00/29214. Other preferred IR-dyes are described in EP 1 614 541 (page 20 line 25 to page 44 line 29), EP 1 736 312 (paragraphs [0008] to [0021]), EP 1 910 082, EP 2 234 964 and EP 2 072 570. The latter IR-dyes are especially preferred in the on-press development embodiment of this invention since these dyes give rise to a print-out image after exposure to IR-light, prior to development on-press. IR-dyes preferably used in this invention are water compatible, most preferably water soluble.

A preferred compound is the following cyanine dye IR-1 or a suitable salt thereof: 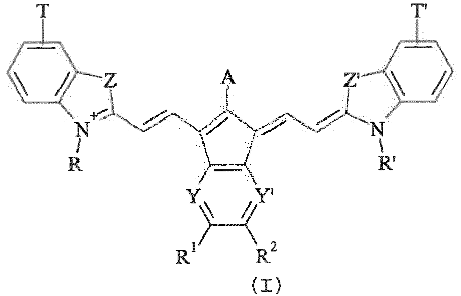 wherein
A represents hydrogen, an optionally substitued alkyl, aralkyl, aryl or heteroaryl group, halogen, -ORc, -SRd, -SO2Re, -NRfRg, -NRh(SO2Ri) or -NRj(CO2Rk) wherein Rc and Rg independently represent an optionally substituted aryl group, Rd , Re and Rf independently represent an optionally substituted alkyl, aralkyl, aryl or heteroaryl group, Rh, Rj and Rk independently represent an optionally substituted alkyl or aryl group, Ri represents an optionally substituted alkyl or aryl group or -NRi1Ri2 wherein Ri1 and Ri2 represent hydrogen, an optionally substituted alkyl or aryl group;
Y and Y' independently represent -CH- or -N-;
R1 and R2 independently represent hydrogen, an optionally substituted alkyl or aryl group or represent the necessary atoms to form a ring;
Z and Z' independently represent -S-, -CH=CH- or -CReRf- wherein Re and Rf independently represent an optionally substituted alkyl aralkyl or aryl group;
R and R' independently represent an optionally substituted alkyl group; an alkylene oxide group or a silicone oxide group; most preferably an optionally substituted alkyl group;
and T an T' independently represent hydrogen, an alkyl group or an optionally substituted annulated benzo ring.

Preferably, R and R' are anionic substituted alkyl groups. Preferred anionic substituded alkyl groups are selected from:
*-(CH2)m-X-SO3- M+;
*-(CH2)m-X-PO(OH)O- M+;
*-(CH2)m-(CH2)CO2- M+; 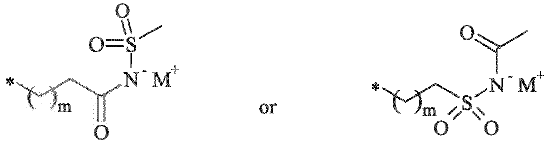 wherein
   m is 1, 2, 3 or 4;
   X represents O, S or -CH2-;
   M+ represents a a counterion to balance the charge
   * represents the linking position to the rest of the molecule

Suitable monovalent cations are for example -[NRIRmRn]+ wherein RI, Rm and Rn independently represent hydrogen or an alkyl group such as for example a methyl, ethyl, propyl or isopropyl group.

Preferably A represents -NRh(SO2Ri) wherein Rh and Ri are as defined above. Preferably, Ri represents an optionally substituted alkyl group.

The infrared absorbing dye preferably includes an indenyl group. More preferably, the IR-dye represents structure I wherein Y and Y' are -CH-.

In a preferred embodiment, the IR-dye has a structure according to 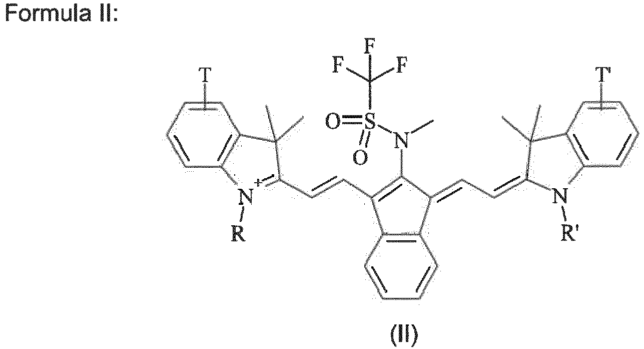 wherein R and R', T and T' have the same meaning as given above.

In a more preferred embodiment, the IR-dye has a structure according to 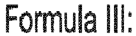 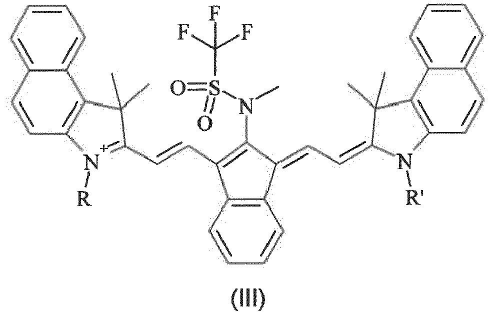 wherein R and R' have the same meaning as described above.

The substituents optionally present on the alkyl, aralkyl, aryl or the heteroaryl group may be represented by a halogen such as a fluoro, chloro, bromo or iodo atom, a hydroxyl group, an amino group, a (di)alkylamino group or an alkoxy group.

In the present invention, suitable alkyl groups include 1 or more carbon atoms such as for example C1 to C22-alkyl groups, more preferably C1 to C12-alkyl groups and most preferably C1 to C6-alkyl groups. The alkyl group may be lineair or branched such as for example methyl, ethyl, propyl (n-propyl, isopropyl), butyl (n-butyl, isobutyl, t-butyl), pentyl, 1,1-dimethylpropyl, 2,2-dimethylpropyl and 2-methyl-butyl, or hexyl. Suitable aryl groups include for example phenyl, naphthyl, benzyl, tolyl, ortho- meta- or para-xylyl, anthracenyl or phenanthrenyl. Suitable aralkyl groups include for example phenyl groups or naphthyl groups including one, two, three or more C1 to C6-alkyl groups. Suitable heteroaryl groups are preferably monocyclic- or polycyclic aromatic rings comprising carbon atoms and one or more heteroatoms in the ring structure. Preferably 1 to 4 heteroatoms independently selected from nitrogen, oxygen, selenium and sulphur and/or combinations thereof. Examples include pyridyl, pyrimidyl, pyrazoyl, triazinyl, imidazolyl, (1,2,3,)- and (1,2,4)-triazolyl, tetrazolyl, furyl, thienyl, isoxazolyl, thiazolyl and carbazoyl.

The most preferred IR-dye has the following structure (Formula IV):

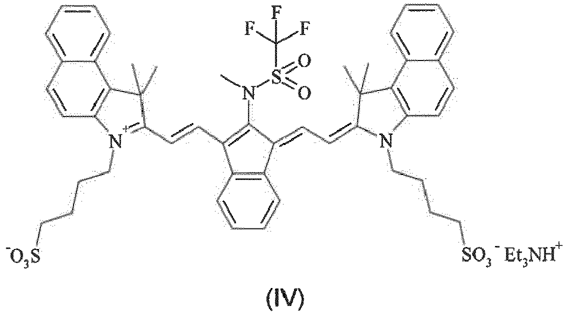

### Binder

The coating may further contain a hydrophilic binder. The hydrophilic binder is preferably present in the image-recording layer. Examples of suitable hydrophilic binders are homopolymers and copolymers of vinyl alcohol, (meth)acrylamide, methylol (meth)acrylamide, (meth)acrylic acid, hydroxyethyl (meth)acrylate, maleic anhydride/vinylmethylether copolymers, copolymers of (meth)acrylic acid or vinylalcohol with styrene sulphonic acid.

Preferably, the hydrophilic binder comprises polyvinylalcohol or polyacrylic acid.

The amount of hydrophilic binder may be between 2%wt and 30%wt, preferably between 2%wt and 20%wt, more preferably between 3%wt and 10%wt relative to the total weight of all ingredients of the coating. The amount of the thermoplastic polymer particles relative to the amount of the binder is preferably between 4%wt and 15%wt, more preferably between 5%wt and 12%wt, most preferably between 6%wt and 10%wt.

### Other ingredients

Colorants, such as dyes or pigments, which provide a visible color to the coating and remain in the exposed areas of the coating after the processing step, may be added to the coating. The image-areas, which are not removed during the processing step, form a visible image on the printing plate and inspection of the lithographic image on the developed printing plate becomes feasible. Typical examples of such contrast dyes are the amino-substituted tri- or diarylmethane dyes, e.g. crystal violet, methyl violet, victoria pure blue, flexoblau 630, basonylblau 640, auramine and malachite green. Also the dyes which are discussed in depth in the detailed description of EP 400 706 are suitable contrast dyes. In a preferred embodiment, anionic tri- or diaryl-methane dyes are used. Dyes which, combined with specific additives, only slightly color the coating but which become intensively colored after exposure, as described in for example WO2006/005688 are also of interest. Other preferred contrast dyes are those described in EP 1 914 069. Pigments of interest are phtalocyanine and quinacridones pigments such as for example Heliogen Blau commercially available from BASF and PV23 (IJX1880) commercially available from Cabot Corporation.

Typical contrast dyes may be combined or even replaced by infrared dyes capable of forming a visible colour upon exposure to infrared radiation, as described above.

The coating may further comprise a light stabiliser and/or anti-oxidant. Suitable light stabilizers and/or anti-oxidants are steric hindered phenoles, hindered amine light stabilizers (HALS) and their N-oxyl radicals, tocopheroles, hydroxyl amine derivatives, such as hydroxamic acids and substituted hydroxylamines, hydrazides, thioethers or trivalent organophosphor compounds such as phosphites and reductones. Preferably, the light stabilizer is a reductone. In a particular preferred embodiment, the coating comprises a phenolic compound containing a phenolic ring having at least one substituent according to Formula V (see below) and optional additional substituents having a Hammett sigma para-value (σp) less than or equal to 0.3. The phenolic compound preferably contains phenol, naphtol or a hydroxy substituted indole. Preferred substituents having a Hammett sigma para-value (σp) less than or equal to 0.3 are for example an optionally substituted alkyl or aryl group, a halogen, an alkoxy group, a thioether, an amino group and a hydroxyl group.

The substituent acccording to Formula V has the following structure: 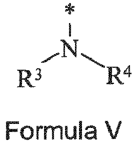 wherein
* is a linking position to the aromatic ring of the phenolic compound; and R3 and R4 are independently represented by hydrogen, an optionally substituted alkyl group, an optionally substituted alkenyl group, an optionally substituted alkynyl group, an optionally substituted alkaryl group, an optionally substituted aralkyl group and an optionally substituted aryl or heteroaryl group;
R3 and R4 may represent the necessary atoms to form a five to eight membered ring, with the proviso that R3 and R4 are bonded to N via a carbon-nitrogen bond;
any of R3 and R4 together with N and the phenolic ring may represent the necessary atoms to form a five or six membered ring.

Optionally, the coating may further contain additional ingredients. For example, additional binders, polymer particles such as matting agents and spacers, surfactants such as perfluoro-surfactants, silicon or titanium dioxide particles, development inhibitors, development accelerators, colorants, metal complexing agents are well-known components of lithographic coatings.

Preferably the coating comprises an organic compound, including at least one phosphonic acid group or at least one phosphoric acid group or a salt thereof, as described in EP 1 940 620. These compounds may be present in the coating in an amount between 0.05 and 15%wt, preferably between 0.5 and 10%wt, more preferably between 1 and 5 %wt relative to the total weight of the ingredients of the coating.

The ingredients present in the coating as described above may be present in the image-recording layer or in an optional other layer.

### Additional layers

To protect the surface of the coating, in particular from mechanical damage, a protective layer may optionally be applied on the image-recording layer. The protective layer generally comprises at least one water-soluble polymeric binder, such as polyvinyl alcohol, polyvinylpyrrolidone, partially hydrolyzed polyvinyl acetates, gelatin, carbohydrates or hydroxyethylcellulose. The protective layer may contain small amounts, i.e. less than 5 % by weight, of organic solvents. The thickness of the protective layer is not particularly limited but preferably is up to 5.0 µm, more preferably from 0.05 to 3.0 µm, particularly preferably from 0.10 to 1.0 µm.

The lithographic printing plate precursor can be prepared by applying on a support the coating as described below and drying the precursor.

### Support

The support of the lithographic printing plate precursor has a hydrophilic surface or is provided with a hydrophilic layer. The support may be a sheet-like material such as a plate or it may be a cylindrical element such as a sleeve which can be slid around a print cylinder of a printing press.

In one embodiment of the invention the support is a metal support such as aluminum or stainless steel. The support can also be a laminate comprising an aluminum foil and a plastic layer, e.g. polyester film. A particularly preferred lithographic support is an aluminum support. Any known and widely used aluminum materials can be used. The aluminum support has a thickness of about 0.1-0.6 mm. However, this thickness can be changed appropriately depending on the size of the printing plate used and the plate setters on which the printing plate precursors are exposed.

To optimize the lithographic properties, the aluminum support is preferably subjected to several treatments well known in the art such as for example degrease, surface roughening, etching, anodization, sealing and/or surface treatment. In between such treatments, a neutralization treatment is often carried out. A detailed description of these treatments can be found in e.g. EP 1 142 707, EP 1 564 020 and EP 1 614 538.

The surface roughness of the support, expressed as arithmetical mean center-line roughness Ra (measured with a Perthometer following ISO 4288 and ISO 3274, needle geometry 2/60° and 15 mg load), may vary between 0.05 and 1.5 µm. The aluminum substrate of the current invention has preferably a Ra value between 0.15 µm and 0.45 µm, more preferably between 0.20 µm and 0.40 µm and most preferably between 0.25 µm and 0.38 µm. The lower limit of the Ra value is preferably about 0.10 µm. More details concerning the preferred Ra values of the surface of the grained and anodized aluminum support are described in EP 1 356 926.

A preferred aluminum substrate, characterized by an arithmetical mean center-line roughness Ra less than 0.45 µ is described in EP 1 356 926.

Optimizing the pore diameter and distribution thereof of the grained and anodized aluminum surface as described in EP 1 142 707 and US 6,692,890 may enhance the presslife of the printing plate and may improve the toning behaviour. Avoiding large and deep pores as described in US 6,912,956 may also improve the toning behaviour of the printing plate. An optimal ratio between pore diameter of the surface of the aluminium support and the average particle size of the thermoplastic polymer particles may enhance the presslife of the plate and may improve the toning behaviour of the prints. This ratio of the average pore diameter of the surface of the aluminium support to the average particle size of the thermoplastic polymer particles present in the image-recording layer of the coating, preferably ranges from 0.05:1 to 0.8:1, more preferably from 0.10:1 to 0.35:1.

By anodising the aluminum support, its abrasion resistance and hydrophilic nature are improved. The microstructure as well as the thickness of the Al2O3 layer are determined by the anodising step, the anodic weight (g/m2 Al2O3 formed on the aluminium surface) varies between 1 and 8 g/m2. The anodic weight is preferably between 2.5 g/m2 and 5.5 g/m2, more preferably 3.0 g/m2 and 5.0 g/m2 and most preferably 3.5 g/m2 and 4.5 g/m2.

The grained and anodized aluminum support may be subject to a so-called post-anodic treatment to improve the hydrophilic character of its surface. More detailed descriptions of these treatments are given in GB 1 084 070, DE 4 423 140, DE 4 417 907, EP 659 909, EP 537 633, DE 4 001 466, EP 292 801, EP 291 760 and US 4,458,005. Post-anodic treatment of a grained and anodized support with a polyvinylmethylphosphonic acid solution having a pH of 2 or lower provides printing plates with a highly improved clean out behaviour.

According to another embodiment, the support can also be a flexible support, which is provided with a hydrophilic layer. The flexible support is e.g. paper, plastic film, thin aluminum or a laminate thereof. Preferred examples of plastic film are poly-ethylene terephthalate film, polyethylene naphthalate film, cellulose acetate film, polystyrene film, polycarbonate film, etc. The plastic film support may be opaque or transparent. Particular examples of suitable hydrophilic layers that may be supplied to a flexible support for use in accordance with the present invention are disclosed in EP 601 240, GB 1 419 512, FR 2 300 354, US 3,971,660; US 4,284,705; EP 1 614 538, EP 1 564 020 and US 2006/0019196.

### Exposure step

The printing plate precursors of the present invention can be exposed to infrared light by means of an infrared laser. Preferably lasers, emitting near infrared light having a wavelength in the range from about 700 to about 1500 nm, e.g. a semiconductor laser diode, a Nd:YAG or a Nd:YLF laser, are used. Most preferably, a laser emitting in the range between 780 and 830 nm is used. The infrared light is converted into heat by an IR-dye as discussed above. The required laser power depends on the sensitivity of the image-recording layer, the pixel dwell time of the laser beam, which is determined by the spot diameter (typical value of modern plate-setters at 1/e2 of maximum intensity: 10-25 µm), the scan speed and the resolution of the exposure apparatus (i.e. the number of addressable pixels per unit of linear distance, often expressed in dots per inch or dpi; typical value: 1000-4000 dpi).

Preferred lithographic printing plate precursors according to the present invention produce a useful lithographic image upon image-wise exposure with IR-light having an energy density, measured at the surface of said precursor, of 200 mJ/cm² or less, more preferably of 180 mJ/cm² or less, even more preferably of 165 mJ/cm² or less, and most preferably of 150 mJ/cm² or less. With a useful lithographic image on the printing plate, 2 % dots (at 200 Ipi) are perfectly visible on at least 1000 prints on paper. Exposure is preferably carried out with commercially available platesetters.

As an alternative, the printing plate precursor may be imagewise heated by a heating element to form an image.

Due to the heat generated during the exposure step, the thermoplastic polymer particles may fuse or coagulate so as to form a phase which corresponds to the printing areas of the printing plate. Coagulation may result from heat-induced coalescence, softening or melting of the thermoplastic polymer particles. The particle size determines to a large extent the sensitivity for latex coagulation. There is no specific upper limit to the coagulation temperature of the thermoplastic polymer particles, however the temperature should be sufficiently below the decomposition temperature of the polymer particles. Preferably the coagulation temperature is at least 10°C below the temperature at which the decomposition of the polymer particles occurs. The coagulation temperature is preferably higher than 50°C, more preferably above 100°C.

### Development

In the development step after the exposure step, the non-exposed areas of the image-recording layer are at least partially removed without essentially removing the exposed areas, i.e. without affecting the exposed areas to an extent that renders the ink-acceptance of the exposed areas unacceptable.

The printing plate precursor may be developed off-press by means of a suitable processing liquid. The processing liquid can be applied to the plate e.g. by rubbing with an impregnated pad, by dipping, immersing, (spin-)coating, spraying, pouring-on, either by hand or in an automatic processing apparatus. The treatment with a processing liquid may be combined with mechanical rubbing, e.g. by a rotating brush. The obtained plate - i.e. the developed plate precursor - can, if required, be post-treated with rinse water, a suitable correcting agent or preservative as known in the art. During the development step, any water-soluble protective layer present is preferably also removed. Suitable processing liquids are plain water, an alkaline solution or an aqueous solution. In a preferred embodiment, the processing liquid is a gum solution. A suitable gum solution which can be used in the development step is described in for example EP 1 342 568 and WO 2005/111727. The development is preferably carried out at temperatures of from 20 to 40°C in automated processing units as customary in the art. The development step may be followed by a rinsing step and/or a gumming step.

In another embodiment, the printing plate precursor is after exposure mounted on a printing press and developed on-press by supplying ink and/or fountain or a single fluid ink to the precursor. Alternatively, development off-press with e.g. a gumming solution, wherein the non-exposed areas of the image-recording layer are partially removed, may be combined with a development on-press, wherein a complete removal of the non-exposed areas is realised.

### Post treatment

The plate precursor may be post-treated with a suitable correcting agent or preservative as known in the art. To increase the resistance of the finished printing plate and hence to extend the presslife, the layer can be heated to elevated temperatures (so called 'baking'). The plate can be dried before baking or is dried during the baking process itself. During the baking step, the plate can be heated at a temperature which is higher than the glass transition temperature of the thermoplastic particles. The baking period is preferably more than 15 seconds, more preferably more than 20 seconds and most preferably the baking period is less than 2 minutes. A preferred baking temperature is above 60°C, more preferably above 100°C. For example, the exposed and developed plates can be baked at a temperature of 230°C to 250°C for about 30 seconds to 1.5 minutes. Baking can be done in conventional hot air ovens or by irradiation with lamps emitting in the infrared or ultraviolet spectrum. As a result of this baking step, the resistance of the printing plate to plate cleaners, correction agents and UV-curable printing inks may increase. A baking process as disclosed in EP 1 767 349 may also be applied in the present invention.

### Drying step

After the processing step the plate may be dried in a drying unit. In a preferred embodiment the plate is dried by heating the plate in the drying unit which may contain at least one heating element selected from an IR-lamp, a heated metal roller or a hot air system (heated air), preferably heated air.

In the drying step, volatile ingredients and/or liquids (e.g. solvents and/or water) are, at least for the most part, removed from the coating. The plate is preferably dried at a temperature equal to or above 25°C. Preferably between 30°C and 100°C, more preferably between 35°C and 80°C, and most preferably between 40°C and 60°C. A longer heating time is usually used when a lower heating temperature is used, and a shorter heating time is used when a higher heating temperature is used. The drying time is typically between 3 seconds and 10 minutes, more preferably between 3 seconds and 5 minutes and most preferably between 2 seconds and 2 minutes. The plate is preferably dried with heated air in the drying section of a processing apparatus, or in a separate device.

### Printing

The printing plate thus obtained is used for conventional, so-called wet offset printing, in which the ink as described above and an aqueous dampening liquid is supplied to the plate.

According to the present invention there is provided a method for printing including the steps of image-wise exposing the plate precursor as described above to light and/or heat, optionally developing the obtained exposed precursor, optionally drying the exposed precursor, mounting the obtained plate or plate precursor on a cylinder of a printing press and rotating the plate cylinder while feeding dampening liquid and LED UV ink to the plate and transferring the ink to a substrate; preferably paper. The obtained printed substrate is subjected to UV radiation. The UV radiation is preferably carried out with a UV LED and may be applied with a UV LED curing device. This device may be included in the printing press.

There are no particular limitations on the substrate, it may be a plastic film or preferably a paper. Examples of paper substrates that can be used include coated papers, non-coated papers, other processed papers such as synthetic papers, cardboard or paperboard (e.g. for folding cartons). Examples of the plastic film include olefin-based films such as polyethylene and polypropylene, polyester films optionally modified with polyethylene terephthalate, cellophane, polyvinylidene chloride, polyvinylidene chloride copolymers, polyvinylidene fluoride, polyvinyl chloride, nylon, polyacrylic acid and polymethacrylic acid.

### UV LED radiation step

According to the method of the present invention, the printed substrates are subjected to a UV LED radiation step. The printed substrates are exposed to ultraviolet light emitted by a diode (UV LED). Preferably at least one UV LED is used, more preferably at least two UV LED's are used and most preferably more than three UV LED's are used. The UV LED's are preferably ranged in a row and are then referred to as a UV LED strip, a UV LED array or UV LED bar. Preferably at least one UV LED bar is used, more preferably at least two UV LED bars are used and most preferably at least three or more UV LED bars are used. An example of a suitable UV LED bar is for example the XP serie from Baldwin Technology Company.

The ultraviolet light emitting diode (UV LED) preferably emits light in the UV-A spectrum. The UV-A spectrum refers to light having a wavelength between about 315 nm to 450 nm. More preferably the UV LED emits light between about 320 nm to 420 nm and most preferably between 330 and 400 nm or between 340 and 380 nm. Often UV LED's emitting at 365 nm or 395 nm are used. UV LED's with a power per LED of preferably 10⁻⁶ to 15 Watt, more preferably of 10⁻⁴ to 10 Watt, and most preferably of 10⁻² to 5 Watt are used. The exposure time to the UV LED lights is preferably between 0.1 s and 5 minutes, more preferably between 0.5 s and 1 minute and most preferably between 1 s and 30 s.

The UV LED radiation may be carried out with a curing device.

### EXAMPLE

### Image wise exposure

Azura TU™, a commercial printing plate of Agfa NV based on coalescence of latex particles, was exposed on an Avalon N8-90 thermal plate-setter, trademark from Agfa NV, at the energy densities of 160 mJ/cm² at which image reproduction is linearized.

### Processing

After imaging, the plate precursor was developed in an Azura CX85 cleanout unit, commercially available from Agfa NV with Azura TU gum, commercially available from Agfa NV, at 24°C and a speed of 1.6 m/min.

### Presslife of the printing plate

The dried printing plate was mounted on a Ryobi 522HXX; commercially available from Ryobi. The printing was performed on Offset paper 70 g/m² paper (commercially available from Stora Enso) using the ink as defined in Table 1 and an IPA-free fountain solution containing 3% Antura fount AFS1 (commercially available from Agfa NV).

When during printing, the image parts of a printing plate wear, the print quality reduces (i.e. for example image damage) which is visible on the printed sheets. The presslife of each printing plate was quantified by number of sheets that was printed before a critical pattern, B25 2x2 reduced below a threshold loss of 8% dot coverage.

The obtained presslife results are summarized in Table 1 below.

**Table 1: Presslife results of printing with a latex based plate and black ink**

| **Printing Plate Azura TU (1)** | **Ink (2)** | **Ink filler** | **Mohs hardness** | **Maximum presslife (3) %** |
|---|---|---|---|---|
| Example 1 inventive | Ink 1 | Talc | 1 | 90 |
| Example 2 comparative | Ink 2 | China Clay | 2.5 | 50 |
| Example 3 comparative | Ink 3 | China Clay + Talc | 2.5 + 1 | 40 |

| | | | | |
|---|---|---|---|---|
| (1) Printing plate precursor commercially available from Agfa NV; (2) Ink 1: XLED UV STAR commercially available from Epple, Ink 2: XCURA EVO BA1015 commercially available from Flint, Ink 3: Sicura low NRGY black, commercially available from Siegwerk; (3) The maximum presslife is determined relative to the maximum presslife of Elite Eco (printing plate commercially available from Agfa NV) which is used as an internal reference each run as the presslife of this plate is unaffected by the type of filler in the LED UV ink. | | | | |

The results summarized in Table 1 illustrate that Inventive Example 1 including talc as a filler with a Mohs hardness of 1 shows a significantly improved presslife compared to comparative Examples 2 and 3 including China Clay (Mohs hardness 2.5).

## Claims

1. A method of printing comprising the steps of
(i) image-wise exposing a lithographic printing plate precursor comprising a support and a heat- and/or light-sensitive coating; said coating comprising an infrared light absorbing agent and an image-recording layer including hydrophobic thermoplastic polymer particles;
(ii) optionally developing the exposed precursor;
(iii) optionally drying and/or heating the plate precursor;
(iv) mounting the lithographic printing plate precursor or printing plate on a plate cylinder of a lithographic printing press and rotating the plate cylinder while feeding dampening liquid and/or ink to the precursor;
(v) transferring the ink to a substrate;
(vi) subjecting the obtained printed substrate to UV LED radiation;
**characterized in that** the ink is a LED UV offset ink and comprises a filler having a Mohs hardness value below 2.5.

2. The method according to claim 1 wherein the filler has a Mohs hardness value below 2.0.

3. The method according to claims 1 or 2 wherein the filler is talc.

4. The method according to any of the preceding claims wherein the ink contains less than 100.000 particles/g ink having a mean particle size above 20 micron.

5. The method according to any of the preceding claims wherein the plate precursor is developed in step (ii) with a gum solution.

6. The method according to any of the preceding claims wherein the plate precursor is developed in step (iv) by mounting the precursor on a plate cylinder of a lithographic printing press and rotating the plate cylinder while feeding dampening liquid and/or ink to the precursor.

7. The method according to any of the preceding claims wherein the hydrophobic thermoplastic polymer particles have an average particle size comprised between 40 nm and 70 nm.

8. The method according to any of the preceding claims wherein the image recording layer further comprises a binder and wherein the amount of the hydrophobic thermoplastic polymer particles is at least 70 % by weight relative to the image recording layer.

9. The method according to any of the preceding claims wherein the energy density applied during imaging is 180 mJ/cm² or less.

10. The method according to any of the preceding claims wherein the UV LED radiation is performed with at least one UV LED having a power of 10⁻⁶ to 15 Watt.

11. The method according to any of the preceding claims wherein the infrared absorbing dye has a structure according to Formula I: 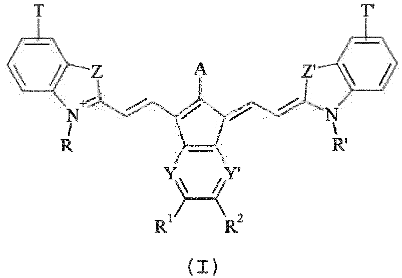 wherein
A represents hydrogen, an optionally substitued alkyl, aralkyl, aryl or heteroaryl group, halogen, -ORc, -SRd, -SO2Re, -NRfRg, -NRh(SO2Ri) or - NRj(CO2Rk) wherein Rc and Rg independently represent an optionally substituted aryl group, Rd , Re and Rf independently represent an optionally substituted alkyl, aralkyl, aryl or heteroaryl group, Rh Rj and Rk independently represent an optionally substituted alkyl or aryl group, Ri represents an optionally substituted alkyl or aryl group or -NRi1 Ri2 wherein Ri1 and Ri2 represent hydrogen, an optionally substituted alkyl or aryl group;
Y and Y' independently represent -CH- or -N-;
R1 and R2 independently represent hydrogen, an optionally substituted alkyl or aryl group or represent the necessary atoms to form a ring;
Z and Z' independently represent -S-, -CH=CH- or -CReRf-;
Re and Rf independently represent an optionally substituted alkyl group; and
R and R' independently represent an optionally substituted alkyl group; an alkylene oxide group or a silicone oxide group;
T and T' independently represent an optionally substituted annulated benzo ring.

12. The method according to any of the preceding claims wherein the infrared dye has a structure according to Formula IV: 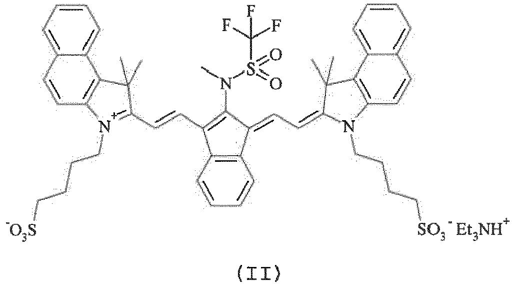 wherein R and R' independently represent an anionic substituted alkyl group.

13. Use of a LED UV ink including a filler having a Mohs hardness below 2.5 and a printing plate including hydrophobic thermoplastic polymer particles for improving the presslife of said plate during printing.

14. An offset printing system including
- a lithographic printing plate or printing plate precursor comprising a heat- and/or light-sensitive coating comprising hydrophobic thermoplastic polymer particles;
- an offset LED UV ink comprising a filler having a Mohs hardness value below 2.5;
- a lithographic printing press.

15. An offset printing system according to claim 14 wherein the printing press includes a UV LED curing device.
